# EUROPEAN PATENT SPECIFICATION

(11) **EP 2 730 089 B1**
(45) Date of publication and mention of the grant of the patent: **06.11.2024**
(21) Application number: 12810750.5
(22) Date of filing: 06.07.2012
(51) Int. Cl.: H04N 19/66

(54) **SYSTEM AND METHOD FOR ENCODING AND DECODING A BITSTREAM FOR A 3D MODEL HAVING REPETITIVE STRUCTURE**
SYSTEM UND VERFAHREN ZUM CODIEREN UND DECODIEREN EINES BITSTROMS FÜR EIN 3D-MODELL MIT REPETITIVER STRUKTUR
SYSTÈME ET PROCÉDÉ DE CODAGE ET DE DÉCODAGE D'UN FLUX BINAIRE POUR UN MODÈLE 3D PRÉSENTANT UNE STRUCTURE RÉPÉTITIVE

(30) Priority: 08.07.2011 WO PCT/CN2011/076991
(43) Date of publication of application: 14.05.2014
(73) Proprietor: InterDigital VC Holdings, Inc., Wilmington, DE 19809 (US)
(72) Inventor: CAI, Kangying, Beijing 100192 (CN); JIANG, Wenfei, Beijing 100192 (CN); TIAN, Jiang, Beijing 100192 (CN)
(74) Representative: AWA Sweden AB
(86) International application number: PCT/CN2012/078301
(87) International publication number: WO 2013/007171

(56) References cited:
- WO-A1-2010/149492
- WO-A1-2010/149492
- CN-A- 1 926 576
- CAI KANGYING ET AL: "MPEG98_Proposal_A3DMC_Bitstream", 98. MPEG MEETING; 28-11-2011 - 2-12-2011; GENEVA; (MOTION PICTURE EXPERT GROUP OR ISO/IEC JTC1/SC29/WG11),, no. m22771, 24 November 2011 (2011-11-24), XP030051334
- CAI KANGYING ET AL: "MPEG98_Proposal_A3DMC_Bitstream", 98. MPEG MEETING; 28-11-2011 - 2-12-2011; GENEVA; (MOTION PICTURE EXPERT GROUP OR ISO/IEC JTC1/SC29/WG11),, no. m22771, 24 November 2011 (2011-11-24), XP030051334
- FRANK BOSSEN (EDITOR): "Description of core experiments on 3D model coding", 46. MPEG MEETING; 07-12-1998 - 11-12-1998; ROMA; (MOTION PICTUREEXPERT GROUP OR ISO/IEC JTC1/SC29/WG11),, no. M4312, 2 December 1998 (1998-12-02), XP030033562, ISSN: 0000-0307
- ZHIDONG YAN ET AL: "Error-Resilient Coding of 3-D Graphic Models via Adaptive Mesh Segmentation", IEEE TRANSACTIONS ON CIRCUITS AND SYSTEMS FOR VIDEO TECHNOLOGY, IEEE SERVICE CENTER, PISCATAWAY, NJ, US, vol. 11, no. 7, 1 July 2001 (2001-07-01), XP011014225, ISSN: 1051-8215
- TIAN D ET AL: "On-demand transmission of 3D models over lossy networks", SIGNAL PROCESSING. IMAGE COMMUNICATION, ELSEVIER SCIENCE PUBLISHERS, AMSTERDAM, NL, vol. 21, no. 5, 1 June 2006 (2006-06-01), pages 396 - 415, XP027934240, ISSN: 0923-5965, [retrieved on 20060601]
- S.P. MUDUR ET AL.: "3D Compression of Engineering Models for Cooperative Computing Applications", INTERNATIONAL CONFERENCE ON :NFRASTRUCTURE FORE-BUSINESS, E-EDUCATION, E-SCIENCE, AND E-MEDICINE, 21 January 2002 (2002-01-21), ITALY, pages 1 - 10, XP002598407, Retrieved from the Internet <URL:www.angelfire.com/space2/dineshshikhare/papers/ssgrr02w.pdf> [retrieved on 20120918]

## Description

### Field of the invention

This invention relates to a bitstream syntax and semantics of repetitive structure discovery based 3D model compression algorithm, a method and an apparatus for encoding the same, and a method and an apparatus for decoding the same.

### Background

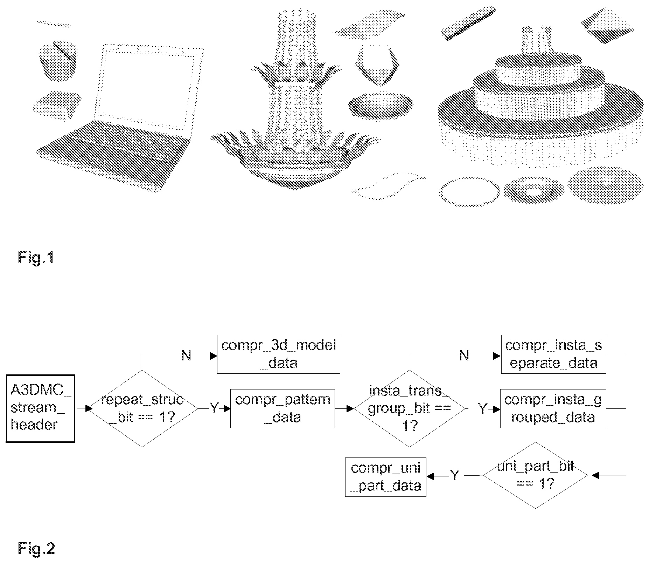

In practical applications, many 3D models consist of a large number of connected components. And these multi-connected 3D models usually contain lots of repetitive structures in various transformations, as shown in Fig.1. Efficient compression methods for this kind of 3D models should be able to extract the redundancy existing in the repetitive structures.

An efficient compression algorithm for multi-connected 3D models, by taking advantage of discovering repetitive structures in the input models, was proposed in "Efficient Compression Scheme for Large 3D Engineering Models," WO 2010149492, filed June 9, 2010, and assigned to Thomson Licensing.

It discovers the structures repeating in various positions, orientations and scaling factors. Then the 3D model is organized into a "pattern-instance" representation. A pattern is the representative geometry of the corresponding repetitive structure. The connected components belonging to a repetitive structure are called instances of the corresponding pattern and are represented by their transformation, i.e. the positions, orientations and possible scaling factors, regarding to the pattern. The orientation of an instance is represented by two orthogonal axes represented by (x0, y0, z0) and (x1, y1, z1) in a Cartesian coordinate system, or (alpha, beta, gamma) in a spherical coordinate system.

### Invention

A compressed bitstream syntax and semantics is disclosed that relates to a repetitive structure discovery based compression algorithm, which has been proven to be more efficient than the static 3D model compression algorithms provided by MPEG-3DGC. The disclosed compressed bitstream syntax and semantics of our repetitive structure discovery based compression algorithm is applicable, for example, to MPEG.

The present invention is about the compressed bitstream syntax and semantics.

The present invention also provides a system and a method for encoding and decoding a bitstream for a 3D model having repetitive structures.

An apparatus that utilizes the method is disclosed below.

The present invention also provides a computer readable medium having executable instructions to cause a computer to perform a method comprising corresponding steps for encoding or decoding a bitstream for a 3D model having repetitive structures.
Fig.1 shows exemplary 3D models with a large number of connected components and repetitive structures;
Fig.2 shows a method for processing a structure of a 3DMC compressed bitstream according to the invention;
Fig. 3 shows an exemplary encoder of 3D models according to the present principles; and
Fig. 4 shows an exemplary decoder of 3D models according to the present principles.

Three-dimensional (3D) meshes are widely used in various applications for representing 3D objects, such as video games, engineering design, e-commerce, virtual reality, and architectural and scientific visualization. Usually their raw representation requires a huge amount of data. However, most applications prefer compact 3D mesh representation for storage or transmission. Typically, 3D meshes are represented by three types of data: connectivity data, geometry data and property data. Connectivity data describe the adjacency relationship between vertices, geometry data specify vertex locations, and property data specify attributes such as the normal vector, material reflectance and texture coordinates. Most 3D compression algorithms compress connectivity data and geometry data separately. The coding order of geometry data is determined by the underlying connectivity coding. Geometry data is usually compressed by three main steps: quantization, prediction and statistical encoding. 3D mesh property data are usually compressed in a similar manner.

The present invention is related to an efficient compression method for large 3D engineering models. Such models are often composed of several partitions, so-called "connected components". The redundancy in the representation of repeating geometric feature patterns can be reduced by regarding all the connected components that are equivalent (e.g. after normalization of position, size) as instances of one geometry pattern. Equivalent components can be clustered. A cluster may refer to only some, or to all components of a 3D model. Then each connected component can be represented by an identifier, such as an alphanumeric identifier, of the corresponding geometry pattern (or clustering class) and the transformation information which can reconstruct the component from the geometry pattern. This transformation information may exemplarily comprise one or more of scale factors, mean (or center), orientation axes (or and rotation information, respectively), or shift information. In principle, also others are possible.

The encoded model can be represented, transmitted and/or stored as a bitstream.

While we want the bitstream to embed all the transformation data, we also want it to be efficient and to address several applications, where sometimes either bitstream size or decoding efficiency or error resilience matters the most.

Therefore, two options are disclosed for how to put the transformation data of one instance, i.e. its position, orientation and scaling factor, in the bitstream. Both of them have their own advantages. An adaptive combination of both is particularly advantageous.

Option (A) is called grouped instance transformation mode: Using this mode, the position, orientation and possible scaling factor of one instance are packed together in the bitstream.

Advantages of option (A) are
- It is error resilient. The decoder can be recovered from losing the transformation of some instances.
- On-line decoding. That means the instances can be decoded one by one during reading the compressed bitstream. There is no need to wait for finishing reading of the whole compressed bitstream.
- Higher codec speed.
- The codec needs no (or only a very small) buffer.

Option (B) is called separate instance transformation mode: The positions, orientations or possible scaling factors of all instances are packed together in the bitstream. In other words, the position, orientation and possible scaling factor of one instance are packed separately in the bitstream.

Advantages of option (B) are
- smaller compressed 3D model size relative to option (A).

A decoder that uses option (B) has also the following features.
- The decoder is not error resilient.
- Off-line decoding. That means the decoder can only start decoding after reading the whole compressed bitstream.
- Lower codec speed.
- Buffer is necessary.

Our bitstream definition includes both the above two options (A) and (B). Then the user, or an automatic control, can choose the one which fits their one or more applications better.

The general structure of the compressed bitstream of our repetitive structure discovery based compression algorithm, A3DMC, is as shown in Fig.2.

The bitstream starts with the header buffer (A3DMC_stream_header), which contains all the necessary information for decoding the compressed stream: whether there is any repetitive structure in the original model, the 3D model compression method used for compressing patterns and other parts if necessary, whether the "grouped instance transformation mode" or "separate instance transformation mode" is used in this bitstream, whether there are some parts of the original model which are not included in any repetitive structure (*unique part*), etc.

If there is no repetitive structure in the original model (repeat_struc_bit != 1), the left part (e.g. the beginning) of the bitstream is the compressed input 3D model using the 3D model compression method indicated in A3DMC_stream_header. Otherwise, the next part in the bitstream is the compressed result of all patterns. Depending on which instance transformation packing mode is chosen in this bitstream, either compr_insta_grouped_data or compr_insta_separate_data is the next part in the bitstream. If there is unique part in the original 3D model, compr_uni_part_data is attached. Otherwise, the bitstream ends.

The compressed bitstream syntax and semantics of A3DMC, will be explained in details as follows.

### Bitstream syntax and semantics

Specification of syntax functions, categories, and descriptors
**f(n):** fixed-pattern bit string using n bits written (from left to right).n depends on the code length for each symbol
**ec(v)** : entropy-coded (e.g., arithmetic coded) syntax element, including possibly configuration symbols.

### A3DMC_stream class

**Tab.1**

| | | |
|---|---|---|
| class **A3DMC_stream{** | Num. of Bits | Descriptor |
| **A3DMC_stream_header** | | |
| **A3DMC_steam_data** | | |
| } | | |

**A3DMC_stream_header:** contains the header buffer.
**A3DMC_steam_data:** contains the data buffer.
**A3DMC_stream_header class**

**Tab.2**

| | | |
|---|---|---|
| class A3DMC_stream_header{ | Num. of Bits | Descriptor |
| **repeat_struc_bit** | 1 | |
| **3d_model_compr_mode** | 2 | |
| **QP** | 5 | |
| If(repeat_struc_bit == 1){ | | |
| **pattern_num** | 8 | |
| If(pattern_num == 255){ | | |
| **pattern_num_2** | 16 | |
| } | | |
| **instance_num** | 16 | |
| If(instance_num == 65535){ | | |
| **instance_num_2** | 32 | |
| } | | |
| **insta_trans_group_bit** | 1 | |
| **insta_orient_mode_bit** | 1 | cartesian / spherical coordinate |
| **use_scaling_bit** | 1 | |
| **uni_part_bit** | 1 | |
| **reserved_bits** | 4 | |
| } | | |
| } | | |

**repeat_struc_bit** : a 1-bit unsigned integer indicating whether there are repetitive structures in the 3D model. 0 means no repetitive structure and 1 means repetitive structure.
**3d_model_compr_mode** : a 2-bit unsigned integer indicating the 3D model compression method used to compress patterns, unique part and the original 3D model itself if it includes no repetitive structures.

**Tab.3**

| | |
|---|---|
| 3d_model_compr_mode | Meaning |
| 00 | SC3DMC |
| 01 | 3DMC Extension |
| 10 & 11 | ISO reserved |

**QP:** a 5-bit unsigned integer indicating the quantization parameter. E.g., the minimum value of QP is 3 and the maximum is 31.
**pattern_num:** a 8-bit unsigned integer indicating the number of all patterns if it is less than 255. The minimum value of pattern_num is 1.
**pattern_num_2:** a 16-bit unsigned integer indicating the number of all patterns if it is not less than 255. In this case, the total pattern number is (pattern_num_2 + 255)
**instance_num:** a 16-bit unsigned integer indicating the number of all instances if it is less than 65535. The minimum value of instance_num is 1.
**instance_num_2:** a 32-bit unsigned integer indicating the number of all instances if it is not less than 65535. In this case, the total instance number is (instance_num_2 + 65535)
**insta_trans_group_bit** : a 1-bit unsigned integer indicating whether "grouped instance transformation mode" or "separate instance transformation mode" is used in this bitstream. 0 for "separate instance transformation mode" and 1 for "grouped instance transformation mode".
**insta_orient_mode_bit :** a 1-bit unsigned integer indicating the encoding mode of instance orientation. 0 means spherical mode and 1 Cartesian mode.
**use_scaling_bit :** a 1-bit unsigned integer indicating whether instance transformation include scaling factors. 0 for scaling factors being included in instance transformation and 1 for not.
**uni_part_bit** : a 1-bit unsigned integer indicates whether there is unique part in the original 3D model. 0 means there is no unique part and 1 means there is unique part.
**reserved_bits** : a 4-bit unsigned integer which is always 0000 and used for byte alignment.

### A3DMC_stream_data class

**Tab.4**

| | | |
|---|---|---|
| class A3DMC_stream_data{ | Num. of bits | Descriptor |
| if (repeat_struc_bit == 1) { | | |
| **compr_repeat_struc_data** | | |
| } | | |
| else{ | | |
| **compr_3d_model_data** | | |
| } | | |
| } | | |

**compr_repeat_struc_data:** contains the compressed 3d model, which includes repetitive structures.
**compr_3d_model_data:** contains the compressed 3d model, which has no repetitive structures and is encoded by the compression method indicated by 3d_model_compr_mode.
**compr_repeat_struc_data class**

**Tab.5**

| | | |
|---|---|---|
| class compr_repeat_struc_data{ | Num. of bits | Descriptor |
| **compr_pattern_data** | | |
| if(insta_trans_group_bit == 1){ | | |
| **compr_insta_grouped_data** | | |
| } | | |
| else{ | | |
| **compr_insta_separate_data** | | |
| } | | |
| if (uni_part_bit == 1){ | | |
| **compr_uni_part_data** | | |
| } | | |
| } | | |

**compr_pattern_data:** contains the compressed pattern data of all patterns, which is encoded by the compression method indicated by 3d_model_compr_mode.
**compr_insta_grouped_data** : contains the compressed instance transformation data using the "grouped instance transformation mode".
**compr_insta_separate_data:** contains the compressed instance transformation data using the "separate instance transformation mode".
**compr_uni_part_data:** contains the compressed unique part data, which is encoded by the compression method indicated by 3d_model_compr_mode.

### compr_insta_grouped_data class

**Tab.6**

| | | |
|---|---|---|
| class compr_insta_grouped_data{ | Num. of bits | Descriptor |
| for (i = 0; i < numofInstance; i ++) { | | |
| **compr_ith_insta_patternID** | | ec(v) |
| **compr_ith_insta_position** | bit_num_insta_position() | f(bit_num_ insta_position()) |
| If (insta_orient_mode_bit == 1){ | | |
| **compr_ith_insta_orient_cartesian** | | |
| } | | |
| else{ | | |
| **compr_ith_insta_orient_spherical** | | |
| } | | |
| if (use_scaling_bit){ | | |
| **compr_ith_insta_scaling** | | ec(v) |
| } | | |
| } | | |
| } | | |

**compr_ith_insta_patternID:** contains the compressed pattern ID of ith instance.
**compr_ith_insta_position:** contains the compressed position of ith instance.
**compr_ith_insta_orient_cartesian:** contains the compressed orientation of ith instance in Cartesian mode.
**compr_ith_insta_orient_spherical:** contains the compressed orientation of ith instance in spherical mode.
**compr_ith_insta_scaling:** contains the compressed scaling factor of ith instance.
bit_num_insta_position(): compute the number of bits for each instance position value based on QP.

### compr_ith_insta_orient_cartesian class

**Tab.7**

| | | |
|---|---|---|
| class compr_ith_insta_orient_cartesian { | Num. of bits | Descriptor |
| **compr_ith_insta_orient_x0** | bit_num_orient_cartesian() | f(bit_num_orient_ cartesian()) |
| **compr_ith_insta_orient_y0** | bit_num_orient_cartesian() | f(bit_num_orient_ cartesian()) |
| **ith_insta_orient_z0_sgn** | 1 | |
| if (compute_z0() < *threshold*) { | | |
| **compr_ith_insta_orient_z0_res** | bit_num_orient_ res_cartesian() | f(bit_num_orient_ res_cartesian()) |
| } | | |
| if (compute_z0() ≈ 0) { | | |
| **compr_ith_insta_orient_z1** | bit_num_orient_cartesian() | f(bit_num_orient_ cartesian()) |
| if (abs(ith_x0) < abs(ith_y0)){ | | |
| **ith_insta_orient_x1_sgn** | 1 | |
| }else{ | | |
| **ith_insta_orient_y1_sgn** | 1 | |
| } | | |
| }else { | | |
| if (abs(ith_x0) < abs(ith_y0)){ | | |
| **compr_ith_insta_orient_x1** | bit_num_orient_cartesian() | f(bit_num_orient_ cartesian()) |
| }else { | | |
| **compr_ith_insta_orient_y1** | bit_num_orient_cartesian() | f(bit_num_orient_ cartesian()) |
| } | | |
| **ith_insta_orient_delta_sgn** | 1 | |
| if (compute_z1() < *threshold*) { | | |
| **compr_ith_insta_orient_z1_res** | bit_num_orient_res_cartesi an() | f(bit_num_orient_ res_cartesian()) |
| } | | |
| } | | |
| } | | |

The orientation of i^{th} instance in Cartesian mode is represented by 2 orthogonal axes (x0, y0, z0) and (x1, y1, z1).
**compr_ith_insta_orient_x0:** contains the compressed x0 of i^{th} instance's orientation.
**compr_ith_insta_orient_y0:** contains the compressed y0 of i^{th} instance's orientation.
**compr_ith_insta_orient_z0_sgn:** a 1-bit unsigned integer indicating the sign of z0 needed for calculating z0 using x0 and y0. 0 for "-" and 1 for "+".
**compr_ith_insta_orient_z0_res:** contains the compressed residual of z0 which is calculated by (z0 - computer_z0()).
**compr_ith_insta_orient_z1:** contains the compressed z1 of i^{th} instance's orientation.
**ith_insta_orient_x1_sgn:** a 1-bit unsigned integer indicating the sign of x1 needed for calculating x1 using x0, y0. 0 for "-" and 1 for "+".
**ith_insta_orient_y1_sgn:** a 1-bit unsigned integer indicating the sign of y1 needed for calculating y1 using x0, y0. 0 for "-" and 1 for "+".
**compr_ith_insta_orient_x1:** contains the compressed x1 of i^{th} instance's orientation.
**compr_ith_insta_orient_y1:** contains the compressed y1 of i^{th} instance's orientation.
**ith_insta_orient_delta_sgn:** a 1-bit unsigned integer indicating the sign needed for calculating x1 or y1 using x0, y0, z0 and y1 or x1. 0 for "-" and 1 for "+".
**compr_ith_insta_orient_z1_res:** contains the compressed residual of z1 which is calculated by (z1 - computer_z1())
*threshold*: a threshold widely accepted in compression field.
compute_z0(): compute z0 of the ith instance using x0, y0 and z0 sign.
bit_num_orient_cartesian(): compute the number of bits for each orientation value in cartesian coordinate system based on QP.
bit_num_orient_res_cartesian() : compute the number of bits for each orientation residual value in cartesian coordinate system based on QP.
compute_z1() : compute z1 of the ith instance using x0, y0, z0, x1 and y1.
**compr_ith_insta_orient_spherical class**

**Tab.8**

| | | |
|---|---|---|
| class compr_ith_insta_orient_spherical { | Num. of bits | Descriptor |
| **compr_ith_insta_orient_alpha** | bit_num_orient_alpha() | f(bit_num_orient_alpha()) |
| **compr_ith_insta_orient_beta** | bit_num_orient_beta() | f(bit_num_orient_beta()) |
| **compr_ith_insta_orient_gamma** | bit_num_orient_gamma() | f(bit_num_orient_gamma() |
| if (need_correction()) { | | |
| **compr_ith_insta_orient_res** | 6*bit_num_orient_ res_cartesian() | f(6*bit_num_orient_ res_cartesian()) |
| } | | |
| } | | |

The orientation of ith instance in spherical mode is represented by 3 angles, alpha, beta & gamma.
**compr_ith_insta_orient_alpha:** contains the compressed alpha of ith instance's orientation.
**compr_ith_insta_orient_beta:** contains the compressed beta of ith instance's orientation.
**compr_ith_insta_orient_gamma:** contains the compressed gamma of ith instance's orientation.
**compr_ith_insta_orient_res** : contains the compressed residual in Cartesian coordinate system of ith instance's orientation.
bit_num_orient_alpha(): compute the number of bits for each alpha value based on QP
bit_num_orient_beta(): compute the number of bits for each beta value based on QP
bit_num_orient_gamma(): compute the number of bits for each gamma value based on QP
need_correction() : check the orientation, if it is in the edge condition which probably results in a large error, return true; otherwise, return false.
**compr_insta_separate_data class**

**Tab.9**

| | | |
|---|---|---|
| class compr_insta_data_separate{ | Num. of bits | Descriptor |
| **compr_insta_patternID_length** | 32 | |
| **compr_insta_patternID_data** | | ec(v) |
| **compr_insta_position_length** | 32 | |
| **compr_insta_position_data** | | |
| **compr_insta_orient_length** | 32 | |
| **compr_insta_orient_data** | | |
| if (use_scaling_bit){ | | |
| **compr_insta scaling_length** | 32 | |
| **compr_insta_scaling_data** | | ec(v) |
| } | | |
| } | | |

**compr_insta_patternID_length** : contains a 32-bit unsigned integer indicating the length of the compressed pattern ID of all instances.
**compr_insta_patternID_data:** contains the compressed pattern IDs of all instances.
**compr_insta_position_length** : contains a 32-bit unsigned integer indicating the length of the compressed position of all instances.
**compr_insta_position_data:** contains the compressed positions of all instances.
**compr_insta_orient_length** : contains a 32-bit unsigned integer indicating the length of the compressed orientation of all instances.
**compr_insta_orient_data:** contains the compressed orientation of all instances.
**compr_insta_scaling_length** : contains a 32-bit unsigned integer indicating the length of the compressed scaling factors of all instances.
**compr_insta_scaling_data:** contains the compressed scaling factors of all instances.
**compr_ins_position_data class**

**Tab. 10**

| | | |
|---|---|---|
| class compr_insta_position_data{ | Num. of bits | Descriptor |
| **insta_position_bbox** | 6*32 | |
| **config_n0_symbols** | | ec(v_n0) |
| **config_n1_symbols** | | ec(v_n1) |
| **config_n2_symbols** | | ec(v_n2) |
| } | | |

**insta_position_bbox:** contains the bounding box of all instance positions.
**config_n0_symbols** : contains n0 ordinary octree configuration symbols.
**config_n1_symbols** : contains n1 ordinary octree configuration symbols.
**config_n2_symbols** : contains n2 ordinary octree configuration symbols.
**compr_insta_orient_data class**

**Tab.11**

| | | |
|---|---|---|
| class compr_insta_orient_data { | Num. of bits | Descriptor |
| If (insta_orient_mod_ bit == 1){ | | |
| for (i = 0; i < numofInstance; i ++) { | | |
| **compr_ith_insta_orient_cartesian** | | |
| } | | |
| } | | |
| else{ | | |
| for (i = 0; i < numofInstance; i ++) { | | |
| **compr_ith_insta_orient_spherical** | | |
| } | | |
| } | | |
| } | | |

Additionally, the bitstream described above may also be embedded in other bitstreams such as the SC3DMC bitstream defined by MPEG-3DGC [W11455].

We use the ISO reserved value 3 of encodingMode of SC3DMCStreamHeader as follows (Ref. to the original Table 53 of [w11455]).

### Table 1 - SC3DMC encoding modes

**Tab. 12**

| **encodingMode** | **Method** |
|---|---|
| 0 | QBCR |
| 1 | SVA |
| 2 | TFAN |
| → 3 | A3DMC |
| 4-255 | ISO reserved |

We revise SC3DMCStream defined in [w11455] as follows.

**Tab. 13**

| | | |
|---|---|---|
| Class SC3DMCStream{ | Num. of bits | Descriptor |
| SC3DMCStreamHeader; | | |
| If(header.encodingMode == 3){ | | |
| **A3DMC_stream_header_SC3DMC;** | | |
| compr_repeat_struc_data | | |
| } | | |
| else{ | | |
| SC3DMCStreamData data; | | |
| } | | |
| } | | |

### A3DMC_stream_header_SC3DMC class

**Tab. 14**

| | | |
|---|---|---|
| class A3DMC_stream_header{ | Num. of Bits | Descriptor |
| 3d_model_compr_mode | 2 | |
| QP | 5 | |
| **reserved_bits_first** | 1 | |
| pattern_num | 8 | |
| If(pattern_num == 255){ | | |
| pattern_num_2 | 16 | |
| } | | |
| instance_num | 16 | |
| If(instance_num == 65535){ | | |
| instance_num_2 | 32 | |
| } | | |
| insta_trans_separate_bit | 1 | |
| insta_orient_mode_bit | 1 | cartesian / spherical coordinate |
| use_scaling_bit | 1 | |
| uni_part_bit | 1 | |
| reserved_bits | 4 | |
| } | | |

**reserved_bits_first** : a 1 bit unsigned integer which is always 0. It is for byte alignment.

In particular, the invention relates to
1. The compressed bitstream syntax and semantics of our repetitive structure discovery based compression algorithm
2. The solution to have separate instance or grouped instance transformation data options both possible in the bitstream.
3. Possible embodiment of our current bitstream proposal in existing SC3DMC bitstream.

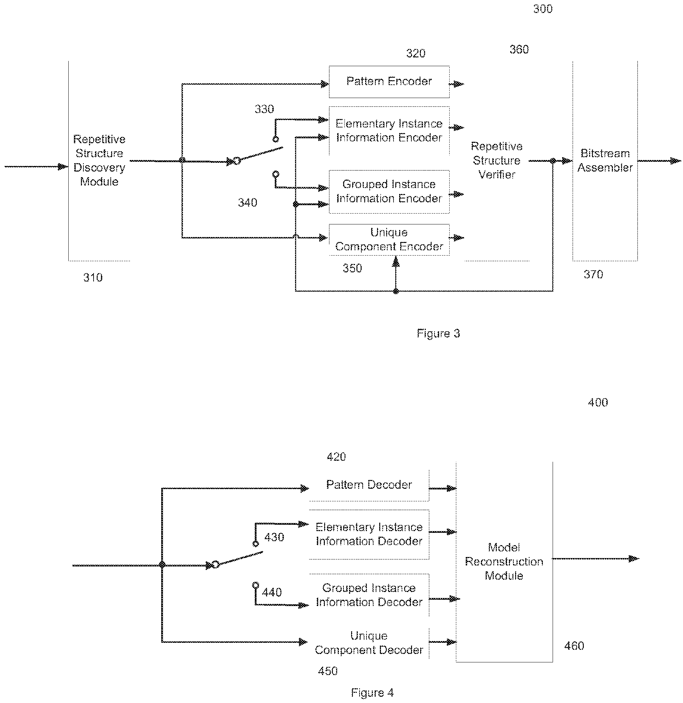

FIG. 3 depicts a block diagram of an exemplary 3D model encoder 300. The input of apparatus 300 may include a 3D model, quality parameter for encoding the 3D model and other metadata. The 3D model first goes through the repetitive structure discovery module 310, which outputs the 3D model in terms of patterns, instances and unique components. A pattern encoder 320 is employed to compress the patterns and a unique component encoder 350 is employed to encode the unique components. For the instances, the instance component information is encoded based on a user-selected mode. If instance information group mode is selected, the instance information is encoded using grouped instance information encoder 340; otherwise, it is encoded using an elementary instance information encoder 330. The encoded components are further verified in the repetitive structure verifier 360. If an encoded component does not meet its quality requirement, it will be encoded using unique component encoder 350. Bitstreams for patterns, instances, and unique components are assembled at bitstream assembler 370.

FIG. 4 depicts a block diagram of an exemplary 3D model decoder 400. The input of apparatus 400 may include a bitstream of a 3D model, for example, a bitstream generated by encoder 300. The information related to patterns in the compressed bitstream is decoded by pattern decoder 420. Information related to unique components is decoded by unique component decoder 450. The decoding of the instance information also depends on the user-selected mode. If instance information group mode is selected, the instance information is decoded using a grouped instance information decoder 440; otherwise, it is decoded using an elementary instance information decoder 430. The decoded patterns, instance information and unique components are reconstructed to generate an output 3D model at model reconstruction module 460.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

In principle, the disclosed invention can also be applied to other data compression areas. The invention results in a unique bitstream format.

While the bitstream embeds all the transformation data, it is efficient and may address several applications, where sometimes either bitstream size or decoding efficiency or error resilience matters the most. Therefore, two mode options are disclosed for how to put the transformation data of one instance, i.e. its position, orientation and scaling factor, in the bitstream. In the first mode (Option A), the position, orientation and possible scaling factor of one instance are packed together in the bitstream. In the second mode (Option B), the positions, orientations or possible scaling factors of all instances are packed together in the bitstream.

It will be understood that the present invention has been described purely by way of example, and modifications of detail can be made without departing from the scope of the invention.

Features may, where appropriate be implemented in hardware, software, or a combination of the two. Connections may, where applicable, be implemented as wireless connections or wired, not necessarily direct or dedicated, connections. Reference numerals appearing in the claims are by way of illustration only and shall have no limiting effect on the scope of the claims.

### Cited References

[PA090039] Kangying Cai, J. Yu and Z.B. Chen, "EFFICIENT COMPRESSION SCHEME FOR LARGE 3D ENGINEERING MODELS", International Patent Application No. PCT/EP2010/058048, published as WO2010/149492A1 (internal reference PA090039)
[CAI2009] Kangying Cai, Wencheng Wang, Zhibo Chen, Quqing Chen and Jun Teng, "Exploiting Repeated Patterns for Efficient Compression of Massive Models", VRCAI2009.
[w11455] Final text of ISO/IEC 14496-16 4^{th} Edition, MPEG-3DGC, 93th MPEG meeting

## Claims

1. A method for encoding or decoding a bitstream representing a 3D model, comprising:
accessing a plurality of instance information associated with the 3D model, each instance being associated with a corresponding pattern and transformation data; the method being **characterized by**
encoding, or decoding, the plurality of instance information for transmission in a bitstream in one of first and second modes, wherein the bitstream comprises a header buffer, and wherein in the first mode, the transformation information associated with each respective instance is grouped in the bitstream with the respective instance on an instance by instance basis, and in the second mode, the transformation information is grouped in the bitstream on a transformation information type by transformation type basis;
wherein the header buffer comprises information indicating whether the instance information is grouped in the first mode or in the second mode;
determining whether there is a part of the 3D model not included in any repetitive structure; and
in response to determining that there is a part of the 3D model not included in any repetitive structure, encoding, or decoding, the part of the 3D model not included in any repetitive structure in the bitstream, wherein information in the header buffer is used to indicate whether there is a part of the 3D model not included in any repetitive structure.

2. The method of claim 1, wherein the type of transformation data includes one or more of position, orientation and scaling factor data.

3. The method of claim 2, wherein the bitstream is encoded, or decoded, using an adaptive combination of the first and second modes, wherein selected ones of the instance information are encoded, or decoded, using the first mode, and selected others of the instance information are encoded, or decoded, using the second mode.

4. An encoder for encoding a bitstream representing a 3D model, comprising:
module for discovering repetitive structure in the 3D model including patterns, and instances associated with respective patterns and transformation data; the encoder being **characterized by**
module for encoding instance information in a bitstream in one of first and second modes, wherein the bitstream comprises a header buffer, and wherein in the first mode, the transformation information associated with each respective instance is grouped in the bitstream with the respective instance on an instance by instance basis, and in the second mode, the transformation information is grouped in the bitstream on a transformation information type by transformation information type basis, and wherein information in the header buffer is used to indicate whether the instance information is grouped in the first mode or in the second mode;
the module for encoding further being for determining whether there is a part of the 3D model not included in any repetitive structure;
the module for encoding further being for, in response to determining that there is a part of the 3D model not included in any repetitive structure, encoding the part of the 3D model not included in any repetitive structure in the bitstream, wherein information in the header buffer is used to indicate whether there is a part of the 3D model not included in any repetitive structure.

5. The encoder of claim 4, wherein the type of transformation data includes one or more of position, orientation and scaling factor data.

6. The encoder of claim 4, wherein the module for encoding encodes the bitstream using an adaptive combination of the first and second modes, wherein selected ones of the instance information are encoded, or decoded, using the first mode, and selected others of the instance information are encoded, or decoded, using the second mode.

7. A decoder for decoding a bitstream representing a 3D model, comprising:
module for accessing a bitstream including instance information associated with corresponding patterns and transformation data; the decoder being **characterized by**
module for decoding the instance information in a bitstream in one of first and second modes, wherein the bitstream comprises a header buffer, and wherein in the first mode, the transformation information associated with each respective instance is grouped in the bitstream with the respective instance on an instance by instance basis, and in the second mode, the transformation information is grouped in the bitstream on a transformation information type by transformation information type basis, and wherein information in the header buffer is used to determine whether the instance information is grouped in the first mode or in the second mode;
the module for decoding further being for determining, based on information in the header buffer, whether there is a part of the 3D model not included in any repetitive structure;
the module for decoding further being for, in response to determining that there is a part of the 3D model not included in any repetitive structure, decoding the part of the 3D model not included in any repetitive structure in the bitstream.

8. The decoder of claim 7, wherein the type of transformation data includes position, orientation and scaling factor data.

9. The decoder of claim 7, wherein the module for decoding decodes the bitstream using an adaptive combination of the first and second modes, wherein selected ones of the instance information are encoded, or decoded, using the first mode, and selected others of the instance information are encoded, or decoded, using the second mode.

10. A bitstream representing a 3D model stored in a tangible medium, comprising:
instance information associated with corresponding patterns and transformation data; the bitstream being **characterized by**
the instance information being included with the bitstream in one of first and second modes, wherein in the first mode, the transformation information associated with each respective instance is grouped in the bitstream with the respective instance on an instance by instance basis, and in the second mode, the transformation information is grouped in the bitstream on a transformation information type by transformation information type basis,
a header buffer, wherein the header buffer comprises information that indicates whether the instance information is grouped in the first mode or in the second mode and information that indicates whether there is a part of the 3D model not included in any repetitive structure; and
where the information in the header buffer indicates that there is a part of the 3D model not included in any repetitive structure, the part of the 3D model not included in any repetitive structure.

11. The bitstream of claim 10, wherein the type of transformation data includes position, orientation and scaling factor data.

## Patentansprüche

1. Verfahren zum Codieren oder Decodieren eines Bitstroms, der ein 3D-Modell darstellt, wobei das Verfahren umfasst:
Zugreifen auf mehrere Instanzinformationen, die mit dem 3D-Modell verknüpft sind, wobei jede Instanz mit einem entsprechenden Muster und Transformationsdaten verknüpft ist;
wobei das Verfahren **gekennzeichnet ist durch**:
Codieren oder Decodieren der mehreren Instanzinformationen zur Übertragung in einem Bitstrom in einem von einem ersten und einem zweiten Modus, wobei der Bitstrom einen Header-Puffer umfasst, und wobei in dem ersten Modus die Transformationsinformationen, die mit jeder jeweiligen Instanz verknüpft sind, in dem Bitstrom Instanz für Instanz mit der jeweiligen Instanz gruppiert werden, und in dem zweiten Modus die Transformationsinformationen in dem Bitstrom Transformationsinformationstyp für Transformationsinformationstyp gruppiert werden;
wobei der Header-Puffer Informationen umfasst, die angeben, ob die Instanzinformationen in dem ersten Modus oder in dem zweiten Modus gruppiert werden;
Bestimmen, ob es einen Teil des 3D-Modells gibt, der in keiner sich wiederholenden Struktur enthalten ist; und
in Reaktion auf das Bestimmen, dass es einen Teil des 3D-Modells gibt, der in keiner sich wiederholenden Struktur enthalten ist, Codieren oder Decodieren des Teils des 3D-Modells, der in keiner sich wiederholenden Struktur in dem Bitstrom enthalten ist, wobei Informationen in dem Header-Puffer verwendet werden, um anzugeben, ob es einen Teil des 3D-Modells gibt, der in keiner sich wiederholenden Struktur enthalten ist.

2. Verfahren nach Anspruch 1, wobei der Typ der Transformationsdaten eines oder mehrere von Positions-, Orientierungs- und Skalierungsfaktordaten umfasst.

3. Verfahren nach Anspruch 2, wobei der Bitstrom unter Verwendung einer adaptiven Kombination des ersten und des zweiten Modus codiert oder decodiert wird, wobei ausgewählte der Instanzinformationen unter Verwendung des ersten Modus codiert oder decodiert werden und ausgewählte andere der Instanzinformationen unter Verwendung des zweiten Modus codiert oder decodiert werden.

4. Codierer zum Codieren eines Bitstroms, der ein 3D-Modell darstellt, wobei der Codierer umfasst:
ein Modul zum Entdecken von sich wiederholenden Strukturen in dem 3D-Modell, einschließlich Mustern und Instanzen, die mit jeweiligen Mustern und Transformationsdaten verknüpft sind;
wobei der Codierer **gekennzeichnet ist durch**:
ein Modul zum Codieren von Instanzinformationen in einem Bitstrom in einem von einem ersten und einem zweiten Modus, wobei der Bitstrom einen Header-Puffer umfasst, und wobei in dem ersten Modus die Transformationsinformationen, die mit jeder jeweiligen Instanz verknüpft sind, in dem Bitstrom Instanz für Instanz mit der jeweiligen Instanz gruppiert werden, und in dem zweiten Modus die Transformationsinformationen in dem Bitstrom Transformationsinformationstyp für Transformationsinformationstyp gruppiert werden, und wobei Informationen in dem Header-Puffer verwendet werden, um anzugeben, ob die Instanzinformationen in dem ersten Modus oder in dem zweiten Modus gruppiert sind;
wobei das Modul zum Codieren des Weiteren dazu dient zu bestimmen, ob es einen Teil des 3D-Modells gibt, der in keiner sich wiederholenden Struktur enthalten ist;
wobei das Modul zum Codieren des Weiteren dazu dient, in Reaktion auf das Bestimmen, dass es einen Teil des 3D-Modells gibt, der in keiner sich wiederholenden Struktur enthalten ist, den Teil des 3D-Modells, der in keiner sich wiederholenden Struktur in dem Bitstrom enthalten ist, zu codieren, wobei Informationen in dem Header-Puffer verwendet werden, um anzugeben, ob es einen Teil des 3D-Modells gibt, der in keiner sich wiederholenden Struktur enthalten ist.

5. Codierer nach Anspruch 4, wobei der Typ der Transformationsdaten eines oder mehrere von Positions-, Orientierungs- und Skalierungsfaktordaten umfasst.

6. Codierer nach Anspruch 4, wobei das Modul zum Codieren den Bitstrom unter Verwendung einer adaptiven Kombination des ersten und des zweiten Modus codiert, wobei ausgewählte der Instanzinformationen unter Verwendung des ersten Modus codiert oder decodiert werden und ausgewählte andere der Instanzinformationen unter Verwendung des zweiten Modus codiert oder decodiert werden.

7. Decodierer zum Decodieren eines Bitstroms, der ein 3D-Modell darstellt, wobei der Decodierer umfasst:
ein Modul für das Zugreifen auf einen Bitstrom, der Instanzinformationen enthält, die mit entsprechenden Mustern und Transformationsdaten verknüpft sind;
wobei der Decoder **gekennzeichnet ist durch**:
ein Modul zum Decodieren der Instanzinformationen in einem Bitstrom in einem von einem ersten und einem zweiten Modus, wobei der Bitstrom einen Header-Puffer umfasst, und wobei in dem ersten Modus die Transformationsinformationen, die mit jeder jeweiligen Instanz verknüpft sind, in dem Bitstrom Instanz für Instanz mit der jeweiligen Instanz gruppiert werden, und in dem zweiten Modus die Transformationsinformationen in dem Bitstrom Transformationsinformationstyp für Transformationsinformationstyp gruppiert werden, und wobei Informationen in dem Header-Puffer verwendet werden, um zu bestimmen, ob die Instanzinformationen in dem ersten Modus oder in dem zweiten Modus gruppiert sind;
wobei das Modul zum Decodieren des Weiteren dazu dient, auf der Grundlage von Informationen in dem Header-Puffer zu bestimmen, ob es einen Teil des 3D-Modells gibt, der in keiner sich wiederholenden Struktur enthalten ist;
wobei das Modul zum Decodieren des Weiteren dazu dient, in Reaktion auf das Bestimmen, dass es einen Teil des 3D-Modells gibt, der in keiner sich wiederholenden Struktur enthalten ist, den Teil des 3D-Modells zu decodieren, der in keiner sich wiederholenden Struktur in dem Bitstrom enthalten ist.

8. Decodierer nach Anspruch 7, wobei der Typ von Transformationsdaten Positions-, Orientierungs- und Skalierungsfaktordaten umfasst.

9. Decodierer nach Anspruch 7, wobei das Modul zum Decodieren den Bitstrom unter Verwendung einer adaptiven Kombination des ersten und des zweiten Modus codiert, wobei ausgewählte der Instanzinformationen unter Verwendung des ersten Modus codiert oder decodiert werden und ausgewählte andere der Instanzinformationen unter Verwendung des zweiten Modus codiert oder decodiert werden.

10. Bitstrom, der ein 3D-Modell darstellt, das in einem greifbaren Medium gespeichert ist, und der umfasst:
Instanzinformationen, die mit entsprechenden Mustern und Transformationsdaten verknüpft sind;
wobei der Bitstrom **dadurch gekennzeichnet ist, dass**:
die Instanzinformationen in einem von einem ersten und einem zweiten Modus in dem Bitstrom enthalten sind, wobei in dem ersten Modus die Transformationsinformationen, die mit jeder jeweiligen Instanz verknüpft sind, in dem Bitstrom Instanz für Instanz mit der jeweiligen Instanz gruppiert sind, und in dem zweiten Modus die Transformationsinformationen in dem Bitstrom Transformationsinformationstyp für Transformationsinformationstyp gruppiert sind,
einen Header-Puffer, wobei der Header-Puffer Informationen umfasst, die angeben, ob die Instanzinformationen in dem ersten Modus oder in dem zweiten Modus gruppiert sind, und Informationen umfasst, die angeben, ob es einen Teil des 3D-Modells gibt, der in keiner sich wiederholenden Struktur enthalten ist; und
wenn die Information in dem Header-Puffer angeben, dass es einen Teil des 3D-Modells gibt, der in keiner sich wiederholenden Struktur enthalten ist, den Teil des 3D-Modells, der in keiner sich wiederholenden Struktur enthalten ist.

11. Bitstrom nach Anspruch 10, wobei der Typ von Transformationsdaten Positions-, Orientierungs- und Skalierungsfaktordaten umfasst.

## Revendications

1. Procédé de codage ou de décodage d'un flux binaire représentant un modèle 3D, comprenant :
l'accès à une pluralité d'informations d'instance associées au modèle 3D, chaque instance étant associée à un motif et des données de transformation correspondants ; le procédé étant **caractérisé par**
le codage ou le décodage de la pluralité d'informations d'instance en vue d'une transmission dans un flux binaire dans un du premier et deuxièème mode, dans lequel le flux binaire comprend un tampon d'en-tête, et dans lequel dans le premier mode, l'information de transformation associée à chaque instance respective est groupée dans le flux binaire avec l'instance respective sur une base instance par instance, et dans le deuxième mode, l'information de transformation est groupée dans le flux binaire sur une base type d'information de transformation par type d'information de transformation ;
dans lequel le tampon d'en-tête comprend une information indiquant si l'information d'instance est groupée dans le premier mode ou le deuxième mode ;
la détermination si il y a une partie du modèle 3D non incluse dans une quelconque structure répétitive ; et
en réponse à la détermination qu'il y a une partie du modèle 3D non incluse dans une quelconque structure répétitive, le codage ou le décodage de la partie du modèle 3D non incluse dans une quelconque structure répétitive dans le flux binaire, dans lequel une information dans le tampon d'en-tête est utilisée pour indiquer si il y a une partie du modèle 3D non incluse dans une quelconque structure répétitive.

2. Procédé selon la revendication 1, dans lequel le type de données de transformation comprend une ou plusieurs de données de position, d'orientation et de mise à l'échelle.

3. Procédé selon la revendication 2, dans lequel le flux binaire est codé ou décodé en utilisant une combinaison adaptative du premier et deuxième modes, dans lequel des informations sélectionnées des information d'instance sont codées ou décodées en utilisant le premier mode, et d'autres informations sélectionnées des informations d'instances sont codées ou décodées en utilisant le deuxième mode.

4. Codeur pour le codage d'un flux binaire présentant un modèle 3D, comprenant :
un module de découverte d'une structure répétitive dans le modèle 3D comprenant des motifs et des instances associées aux modèles et données de transformation respectifs ; le codeur étant **caractérisé par**
un module de codage d'information d'instance dans un flux binaire dans un d'un premier et deuxième modes, dans lequel le flux binaire comprend un tampon d'en-tête et dans lequel dans le premier mode, l'information de transformation associée à chaque instance respective est groupée dans le flux binaire avec l'instance respective sur une base instance par instance, et dans le deuxième mode, l'information de transformation est groupée dans le flux binaire sur une base type d'information de transformation par type d'information de transformation, et dans lequel une information dans le tampon d'en-tête est utilisée pour indiquer si l'information d'instance est groupée dans le premier mode ou dans le deuxième mode ;
le module de codage étant en outre prévu pour déterminer si il y a une partie du modèle 3D non incluse dans une quelconque structure répétitive ;
le module de codage étant en outre prévu pour, en réponse à la détermination qu'il y a une partie du modèle 3D non incluse dans une quelconque structure répétitive, le codage de la partie du modèle 3D non incluse dans une quelconque structure répétitive dans le flux binaire, dans lequel une information dans le tampon d'en-tête est utilisée pour indiquer si il y a une partie du modèle 3D non incluse dans une quelconque structure répétitive.

5. Codeur selon la revendication 4, dans lequel le type de données de transformation comprend une ou plusieurs de données de position, d'orientation et de mise à l'échelle.

6. Codeur selon la revendication 4, dans lequel le module de codage code le flux binaire en utilisant une combinaison adaptative du premier et deuxième modes, dans lequel des informations sélectionnées des information d'instance sont codées ou décodées en utilisant le premier mode, et d'autres informations sélectionnées des informations d'instances sont codées ou décodées en utilisant le deuxième mode.

7. Décodeur pour décoder un flux binaire représentant un modèle 3D, comprenant :
un module d'accès à un flux binaire comprenant des informations d'instance associées aux motifs et données de transformation correspondants ; le décodeur étant **caractérisé par**
un module de décodage de l'information d'instance dans un flux binaire dans un du premier et deuxième mode, dans lequel le flux binaire comprend un tampon d'en-tête, et dans lequel dans le premier mode, l'information de transformation associée à chaque instance respective est groupée dans le flux binaire avec l'instance respective sur une base instance par instance, et dans le deuxième mode, l'information de transformation est groupée dans le flux binaire sur une base type d'information de transformation par type d'information de transformation et dans lequel l'information dans le tampon d'en-tête est utilisé pour déterminer si l'information d'instance est groupée dans le premier mode ou dans le deuxième mode;
le module de décodage étant en outre prévu pour déterminer, sur la base de l'information dans le tampon d'en-tête, si il y a une partie du modèle 3D non incluse dans une quelconque structure répétitive ;
le module de décodage étant en outre prévu pour, en réponse à la détermination qu'il y a une partie du modèle 3D non incluse dans une quelconque structure répétitive, décoder la partie du modèle 3D non incluse dans une quelconque structure répétitive dans le flux binaire.

8. Décodeur selon la revendication 7, dans lequel le type de données de transformation comprend une ou plusieurs de données de position, d'orientation et de mise à l'échelle.

9. Décodeur selon la revendication 7, dans lequel le module de décodage décode le flux binaire en utilisant une combinaison adaptative du premier et deuxième modes, dans lequel des informations sélectionnées des information d'instance sont codées ou décodées en utilisant le premier mode, et d'autres informations sélectionnées des informations d'instances sont codées ou décodées en utilisant le deuxième mode.

10. Flux binaire représentant un modèle 3D mémorisé sur un support tangible, comprenant :
une information d'instance associée à des motifs et données de transformation correspondants ; le flux binaire étant **caractérisé par** :
l'information d'instance étant comprise avec le flux binaire dans un du premier et deuxième modes, dans lequel dans le premier mode, l'information de transformation associée à chaque instance respective est groupée dans le flux binaire avec l'instance respective sur une base instance par instance, et dans le deuxième mode, l'information de transformation est groupée dans le flux binaire sur une base type d'information de transformation par type d'information de transformation ;
un tampon d'en-tête, dans lequel le tampon d'en-tête comprend une information qui indique si l'information d'instance est groupée dans le premier mode ou dans le deuxième mode et une information qui indique si il ya une partie du modèle 3D non incuse dans une quelconque structure répétitive ; et
où l'information dans le tampon d'en-tête indique qu'il y a une partie du modèle 3D non incluse dans une quelconque structure répétitive, la partie du modèle 3d non incluse dans une quelconque structure répétitive.

11. Flux binaire selon la revendication 10, dans lequel le type de données de transformation comprend des données de position, d'orientation et de facteur de mise à l'échelle.
